# EUROPEAN PATENT APPLICATION

(11) **EP 0 862 317 A2**
(43) Date of publication of application: **02.09.1998**
(21) Application number: 98103499.4
(22) Date of filing: 27.02.1998
(51) Int. Cl.: H04N 1/21

(54) **Signal processing method for digital still cameras**

(30) Priority: 27.02.1997 JP 43741/97
(71) Applicant: SANYO ELECTRIC Co., Ltd., Moriguchi-shi, Osaka 570 (JP)
(72) Inventor: Hayashi, Hideto, Daito-shi, Osaka (JP)
(74) Representative: Glawe, Delfs, Moll & Partner

(57) **Abstract**

A digital still camera includes a shutter button. When the shutter button is depressed, the image data from a CCD imager is held in a VRAM. The image data is then compressed according to a JPEG format, and written into a flash memory. In parallel with the writing of the image data to the flash memory, the VRAM is written with sound data, for example, of 6 seconds related to the image data. A flag is set during writing the sound data, and the flag is reset when the writing is ended. Determination for an end of a sound process is made based on a data of this flag. After ending the sound process, the sound data written in the VRAM is compressed and then written into the flash memory. Thereafter, the image data left in the VRAM is recompressed as required.

## Description

### BACKGROUND OF THE INVENTION

### Field of the invention

This invention relates to signal processing methods for digital still cameras, and more particularly to a signal processing method for a digital still camera to record, for example, image data and related sound data (sound memos).

### Description of the prior art

Conventionally, there has been a digital still camera of this kind adapted to write image data and 6-second sound data into a flash memory. In such a digital still camera, the sound data of 6 seconds, i. e. approximately 25 - 30 K bytes is written every 5 bytes into a flash memory by an interruption of 10H (635 microseconds).

However, the interruption can not be suspended because the sound data is inputted continuously for 6 seconds. There was a necessity of processing the image data after completing the process for the sound data. As a result, it took a long time to complete writing of sound data and image data from depression of a shutter button.

### SUMMARY OF THE INVENTION

Therefore, it is a primary object of this invention to provide a signal processing method for a digital still camera by which the time required for recording image data and related sound data is shortened.

This invention is a signal processing method for a digital still camera having a shutter button and a non-volatile first memory, including the steps of: (a) transferring image data to a second memory in response to an operation of the shutter button, (b) writing, by compressing, the image data of the second memory into the first memory, (c) writing sound data from a sound data output circuit into the second memory in parallel with the step (b), (d) determining an end of the sound process at the step (c), (e) writing, by compressing, the sound data into the first memory after ending the sound process, and (f) recompressing the image data as required.

When the shutter button is depressed, the image data from an imaging device is held, for example, in a VRAM as the second memory. Thereafter, the image data is compressed according, for example, to a JPEG format, and written, for example, into a flash memory as the first memory. In parallel with the writing of the image data to the flash memory, the sound data, for example, of 6 seconds that is related to the image data is written into the VRAM. During writing the sound data, a flag, for example, is set, and the flag is reset when the writing is ended. The ending of the sound process is determined by a state of this flag. After ending the sound process, the sound data written in the VRAM is compressed and written into the flash memory. Thereafter, recompression is made for the image data left in the VRAM, as required.

According to this invention, since image data and sound data are processed in a parallel manner, it is possible to shorten the time required for writing the image data and the sound data into the first memory.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a block diagram showing one embodiment of this invention;
Figure 2 is a flowchart showing part of an operation in a camera mode in the Figure 1 embodiment;

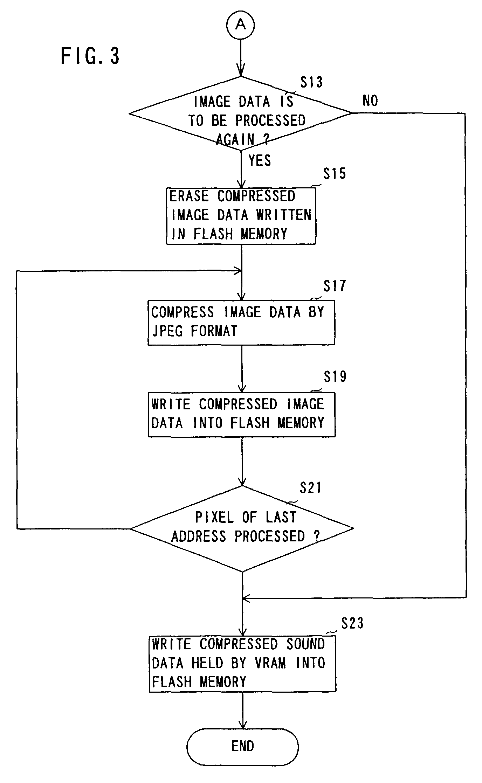

Figure 3 is a flowchart showing another part of the operation in the camera mode in the Figure 1 embodiment; and
Figure 4 is a flowchart showing another part of the operation in the camera mode in the Figure 1 embodiment.

### DETAILED DESCRIPTION OF THE PREFERRED EMBODIMENT

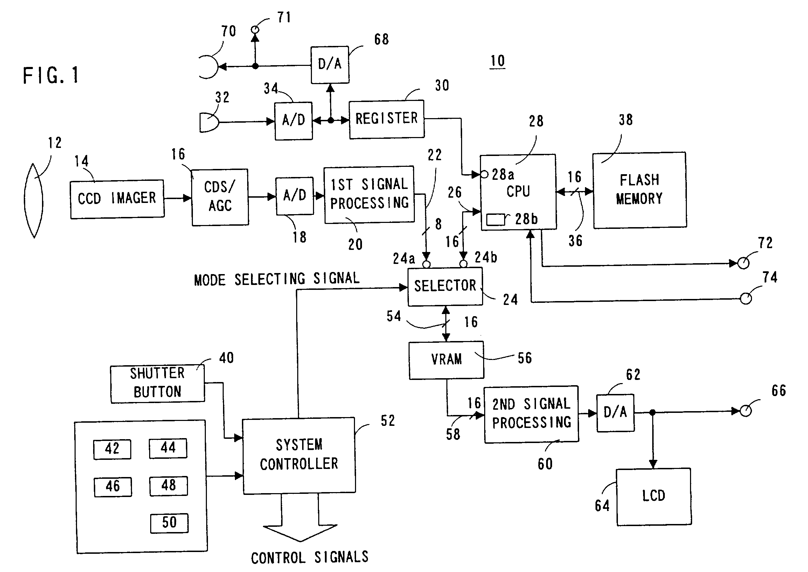

Refereeing to Figure 1, a digital still camera 10 of this embodiment includes a lens 12. Through this lens 12 is given an optical image which is converted into an electric signal by a CCD imager 14. The CCD imager 14 has a color filter for example, in a primary color Bayer arrangement so as to output an electric signal (progressive scan signal) for each pixel according to progressing scan (pixel sequential scan).

The progressive scan signal from the CCD imager 14 is supplied to a CDS/AGC circuit 16. The CDS/AGC circuit 16 subjects known noise removal and level adjustment to the progressive scan signal from the CCD imager 14. The progressive scan signal processed by this CDS/AGC circuit 16 is converted into digital data by an A/D converter 18. The digital data of the progressive scan signal outputted from the A/D converter 18 is supplied to a first signal processing circuit 20. The first signal processing circuit 20 subjects known white-balance adjustment and gamma correction to the digital data (image data) outputted from the A/D converter 18 to supply the image data through an 8-bit bus 22 to a first input 24a of a selector 24. The selector 24 selects the first input 26a or the second input 26b depending upon a mode being set (camera mode or reproducing mode).

The second input 24b of the selector 24 is connected to a CPU 28 through a 16-bit bi-directional bus 26. The CPU 28 is for example a 16-bit CPU. The CPU 28 has an interrupt terminal 28a, to which interrupt terminal 28a is supplied a sound interruption from for example a 5-byte sound register 30.

The sound for a sound memo is supplied from a microphone 32 to an A/D converter 34 so that the sound data from the A/D converter 34 is supplied to a sound register 30. Each time the sound register 30 is loaded for example with 5 bytes of sound data, a sound interruption is inputted from the sound register 30 to the interrupt terminal 28a of the CPU 28.

The CPU 28 is further connected to a flash memory 38 through a 16-bit bus 36. This flash memory 38 is a recording medium which has a capacity for example of 2M bytes to record compressed images and sounds according to an operating program of the CPU 28 and a compression method for example of JPEG. Incidentally, other non-volatile RAMs, other than the flash memory, may be employed as the recording medium.

The digital still camera 10 further includes a shutter button 40, a reproduce/camera mode selecting button 42, a resolution change-over button 44, a monitor on/off button 46, a sound memo button 48, an erase button 50 and so on. The operating signal from the operating button 40 - 50 is supplied to a system controller 52. The system controller 52 outputs a predetermined control signal depending upon an operating signal by the button 40 - 50. The control signal is converted into a serial signal by a P/S converter (not shown) to be supplied to the interrupt terminal 28a of the above-stated CPU 28.

For example, when the shutter button 40 is depressed, the system controller 52 outputs a shutter signal so that the shutter signal is supplied to the interrupt terminal 28a of the CPU 28. In response thereto, the CPU 28 suspends the CCD imager 14 from being inputted (renewed) so that a still picture signal upon the depression of the shutter button 40 is outputted from the CCD imager 14. Meanwhile, if the reproduce/camera mode selecting button 42 is operated, the system controller 52 outputs a control signal representative of either of a reproducing mode or a camera mode. The control signal is supplied to the CPU 28 and also to the selector 24. Accordingly, if the camera mode is set for example, the selector 24 selects the first input 24a, while if the reproducing mode is selected, it selects the second input 24b.

The selector 24 is connected to a VRAM 56 through a 16-bit bus 54. This VRAM 56 is structured for example by a dual-port RAM so that the VRAM can be written through an input bus 54 and simultaneously read out through an output bus 58. This VRAM 56 is used principally for display images on an LCD 64 (to be stated later), and is inherently satisfactory if it has a capacity of approximately 360K bytes. This embodiment, however, utilizes VRAM 56 having a capacity of 512K bytes. Therefore, the region, except for a region used for image representation, is utilized as a working memory for the CPU 28 or temporarily retreating a program from the flash memory 38.

The output bus 58 is also a 16-bit bus so that the image data read out of the VRAM 56 is supplied to a second signal processing circuit 60. The second signal processing circuit 60 includes, for example, a color separating circuit and a matrix circuit, both not shown, so as to convert the image data read out of the VRAM 56 into luminance data and chrominance data. The luminance data and the chrominance data outputted from the second signal processing circuit 60 are converted into an analog luminance signal and chrominance signal by a D/A converter 62. The luminance signal and the chrominance signal from the D/A converter 62 are supplied to the LCD 64 provide on the digital still camera 10 or to a TV monitor (not shown) through an output terminal 66.

In order to reproduce sounds, the digital still camera 10 further includes a D/A converter 68. This D/A converter 68 converts the sound data loaded on a sound register 30 into an analog sound signal. This sound signal is supplied to an earphone 70, a speaker (not shown) or a sound output terminal 71.

Incidentally, where the image data and the sound data obtained by the digital still camera 10 is given to a computer, the image data and the sound data are outputted through an output terminal 72 connected to the CPU 28.

In the digital still camera 10 shown in Figure 1, if the camera mode is set by the reproduce/camera mode selecting button 40, the selector 24 selects its first input 24a. At this time, if the monitor on/off button 46 is operated as required, the LCD 64 can be utilized as a viewfinder.

In this state, while the shutter button 40 is not depressed, the image data obtainable by converting the progressive scan signal from the CCD imager 14 into digital data by the A/D converter 18 is supplied to the first input 24a of the selector 24 via the first signal processing circuit 20 and the bus 22. Since the selector 24 in a camera mode is selected of its first input 24a as explained hereinbefore, the image data from the first signal processing circuit 20 is supplied for example in a DMA (direct memory access) to the VRAM 56 via the input bus 54. The image data supplied to the VRAM 56 is outputted onto an output bus 58, hence displaying an image on the LCD 64. Before depression of the shutter button 40, the VRAM 56 is renewed by the output of the CCD imager 14, i. e. the first signal processing circuit 20 so that the LCD 64 serves as a viewfinder.

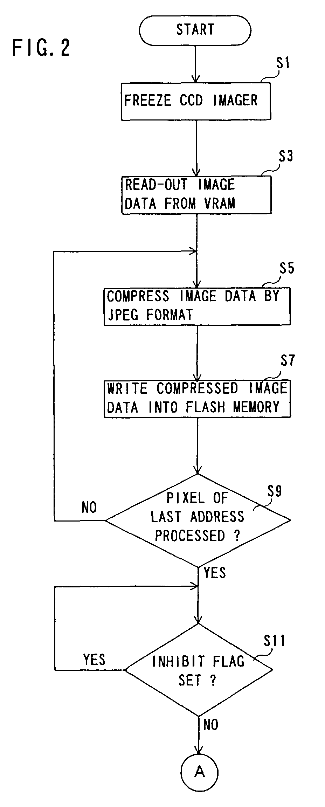

If the shutter button 40 is depressed, a shutter signal is outputted from the system controller 52 and supplied to the interrupt terminal 28a of the CPU 28. Accordingly, the CPU 28 starts a process of a flowchart shown in Figure 2. First, at a step S1 the CCD imager 14 is frozen. Accordingly, the VRAM 56 is finally written with the image data at the time of depressing the shutter button. The CPU 28 reads out the image data written in the VRAM 56 at a step S3, and repeats a routine of steps S5 - S9 to carry out a well-known signal process such as JPEG, thereby compressing the image data. Due to this, compressed image data is stored into the flash memory 38.

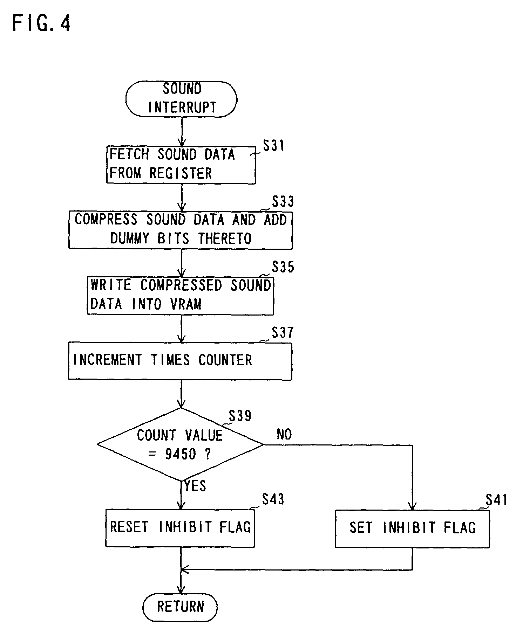

If the shutter button 40 is depressed and a sound is inputted through the microphone 32 after operating the sound memo button 48, the sound is converted into sound data by the A/D converter 34 and loaded onto the sound register 30 having a capacity of 5 bytes. Sound interruptions for processing this sound data are generated by the selector 24 at every 10H after a beginning the A/D conversion. Therefore, the CPU 28 fetches the sound data, by every 5 bytes, through the interrupt terminal 28a at a step S31 in Figure 4, so that the sound data is compressed according to a predetermined signal process at a step S33 and added with dummy bits. Specifically, compressed sound data is created by compressing 40 bits (= 8 bits × 5 bytes) into 20 bits (= 4 bits × 5 bytes) and added with dummy bits. The compressed sound data is written at a step S35 into a predetermined sound area of the VRAM 56.

When the CPU 28 is writing the image data into the flash memory 38, the CPU 28 cannot write the sound data to the flash memory 38. The sound data compressed according to the sound interruption by the CPU 28 is temporarily written in an appropriate area of the VRAM 56. That is, the writing of the compressed sound data to the VRAM 56 is carried out in parallel with writing the compressed image data to the flash memory 28.

The CPU 28 then determines at a step S39 whether a predetermined time, e. g. 6 seconds, of sound data has been processed or not. As stated before, the sound interruption is inputted every 10H, and at each time the sound data of 5 bytes is processed. To process 6 seconds of sound data, there is a necessity of undergoing sound interruptions, for example, in the number of 9450 times (= 525 × 6 ÷ 10 × 30). The CPU 28 therefore possesses a sound-interrupt counter (not shown) so that it determines whether the sound-interrupt counter has counted sound interruptions in the number of 9450 times. Here, if "NO", an inhibiting flag 28b is set to inhibit the sound data of the VRAM 56 from being written into the flash memory 38. If "YES", that is, if the writing of the 6-second sound data to the VRAM 56 has been completed, the inhibiting flag 28b is reset at a step S43. Note that this "9450" is a value calculated on a presumption that the number of horizontal scanning lines is 525 and 1 frame is at 1/30 second.

When the CPU 28 detects an end of a sound interruption by inhibiting flag 28b, the CPU 28 enters from a step S11 to a step S13 where it determines whether or not the image data should be recompressed. Here, if "NO", the CPU writes at a step S23 the 6-second sound data cumulated in the VRAM 56 into the flash memory 38. At this time, the area previously written by the image data is written by a head address at which this sound data is to be written, whereby the CPU 28 can thereafter determine whether a sound memo related to an image is recorded or not. Note that, when the sound data is to be written to the flash memory 38, the sound data is removed of the dummy bits.

If "YES" at the step S13, the compressed image data written in the flash memory 38 is erased at a step S15. At steps S17 - S21 are performed similar processes to those of the steps S5 - S9, to thereby compress the image data held in the VRAM 56 at a higher compression ratio than the compression ratio at the step S5. The compressed image data is written into the flash memory 38. When the writing is ended, the process proceeds to a step S23 where the compressed sound data in the VRAM 56 is written into the flash memory 38. Incidentally, where the first-compressed image data is large in size and the compressed image data cannot be written in the flash memory 38, recompression is made for the image data.

Since, in the camera mode, the flash memory 38 is written by the parallel-process compressed image data and related sound data, reduction can be made for the time between the depression of the shutter button 40 and the writing of the image data and the sound data into the flash memory 38.

When the reproducing mode is selected by the reproduce/camera mode selecting button 42, the selector 24 selects the second input 24a according to a reproducing mode signal. Accordingly, in the reproducing mode the CPU 28 reads image data out of the flash memory 38 and writes this image data into a predetermined area of the VRAM 56 through the selector 24. The CPU 28 expands the image data once written in the VRAM 56, according to a predetermined signal process, e. g. JPEG. The expanded image data is written to the VRAM 56 through the selector 24. Therefore, image data is outputted from the VRAM 56 and supplied, via the second signal processing circuit 60 and the D/A converter 62, to the LCD 64 where a reproduced image is displayed.

In the reproducing mode, the sound data is read out of the flash memory 38 by 5 bytes by an interruption at every 10H, and expanded from 20 bits into 40 bits so that the expanded sound data is written into the sound register 30. Therefore, the sound memo written within the flash memory 38 is reproduced through the earphone 70 or sound output terminal 71.

Incidentally, when the sound memo button 48 and the shutter button 40 are depressed in a state that a reproduced image is displayed on the LCD 64 in the reproducing mode, the sound data is written into the flash memory 38 in a manner related to the reproduced image. If sound data is already recorded, new sound data is overwritten.

In the above embodiment, although part of the VRAM 56 were utilized as a working memory for the CPU 28, another working memory may be provided.

Further, although the embodiments were explained where the electronic image recording apparatus is a digital still camera, this invention is applicable also to an arbitrary electronic image recording apparatus having a recording medium for recording an image and a sound related thereto.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A signal processing method for a digital still camera having a shutter button and a non-volatile first memory, comprising the steps of:
(a) transferring image data to a second memory responsive to an operation of said shutter button;
(b) writing, by compressing, the image data in said second memory into said first memory;
(c) writing sound data from a sound data output circuit into said second memory, in parallel with the step (b);
(d) determining an end of a sound process in the step (c);
(e) writing, by compressing, the sound data into said first memory after the ending of the sound process; and
(f) recompressing the image data as required.

2. A signal processing method according to claim 1, wherein the step (c) includes (c-1) setting a period flag for the sound process and (c-2) resetting the flag upon ending the sound process,
the step (d) being to determine an end of the sound process according to a state of the flag.

3. A signal processing method according to claim 1 or 2, wherein the step (a) is to write the image data into a VRAM, and the step (b) being to write the compressed image data into a flash memory.

4. A signal processing method according to any claims 1 to 3, wherein the step (f) includes (f-1) erasing the image data in said first memory, and (f-2) writing the image data of said second memory into said first memory at a compression ratio higher than the compression ratio in the step (b).
